(19) Europäisches Patentamt
European Patent Office
Office européen des brevets

(11) EP 2 042 397 A1

(12) DEMANDE DE BREVET EUROPEEN

(43) Date de publication:
01.04.2009 Bulletin 2009/14

(51) Int Cl.:
B60W 30/02 (2006.01)    B60W 40/10 (2006.01)

(21) Numéro de dépôt: 07301394.8

(22) Date de dépôt: 25.09.2007

(84) Etats contractants désignés:
AT BE BG CH CY CZ DE DK EE ES FI FR GB GR HU IE IS IT LI LT LU LV MC MT NL PL PT RO SE SI SK TR
Etats d'extension désignés:
AL BA HR MK RS

(71) Demandeur: Peugeot Citroën Automobiles SA
78140 Vélizy-Villacoublay (FR)

(72) Inventeurs:
• Gouriet, Pascal
  92320 Chatillon (FR)
• Djama, Zahir
  75015 Paris (FR)

(54) **Dispositif de stabilisation de vehicule**

(57) L'invention concerne un dispositif de stabilisation de véhicule (10) comportant un programme électronique de stabilité (EPS) destiné à détecter des situations de sur ou sous virage du véhicule (10) et à corriger ces situations en appliquant un couple correcteur sur au moins une roue (1, 2, 3, 4) du véhicule (10). Le dispositif comporte des capteurs (21) de mesure de vitesse angulaire ($\omega_i$) instantanée d'une roue droite (2, 4) et d'une roue gauche (1,3) du véhicule (10). Le programme comporte des moyens (24 à 28) pour déterminer le couple correcteur en fonction d'informations reçues des capteurs (21) de mesure de vitesse angulaire.

FIG.3

**Description**

L'invention concerne un dispositif de stabilisation de véhicule. De nombreux véhicules modernes sont équipés d'un système de régulation électronique de l'ensemble du comportement dynamique d'un véhicule, plus généralement connus sous l'acronyme ESP pour " elektronisches Stabilitätsprogramm " dans la littérature allemande. Ce système qui sera désigné dans la suite de la description par "ESP", permet d'appliquer de façon indépendante à chaque roue du véhicule un couple correcteur afin de contrôler la trajectoire du véhicule par rapport à une consigne.

La plupart des ESP agissent en freinant au moins une roue du véhicule. Par exemple, en cas de sous-virage, lorsque le véhicule ne tourne pas assez, autrement dit, lorsque le véhicule tourne sur un rayon plus grand que celui défini par l'angle de la roue directrice, l'ESP va agir en freinant la roue arrière intérieure au virage pour ramener le véhicule sur la trajectoire souhaitée. Par contre, en cas de survirage (le véhicule part en tête a queue), l'ESP va freiner la roue avant du coté extérieur du virage pour limiter l'embardée. Il est bien sur possible d'appliquer un couple moteur sur au moins une roue pour obtenir l'effet recherché. Ainsi, dans toutes les situations, y compris les manoeuvres d'urgence, le programme aide le conducteur à maîtriser son véhicule.

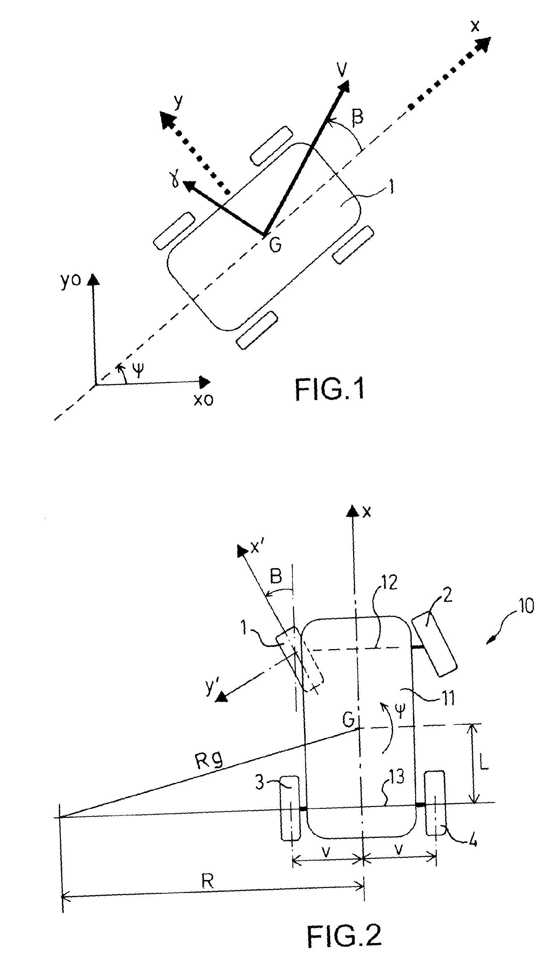

L'ESP établit sa correction à partir de deux paramètres : le lacet et la dérive du véhicule. La figure 1 permet de visualiser ces deux paramètres. Le lacet est un angle, noté Ψ, entre un axe longitudinal x d'un véhicule 10 et un repère fixe xo, yo lié au sol sur lequel le véhicule se déplace. La dérive est un angle, noté β, que fait un vecteur vitesse V du véhicule 10 par rapport à l'axe longitudinal x. Autrement dit :

$$\tan \beta = \frac{Vy}{Vx} \qquad (1)$$

où Vx représente la projection du vecteur vitesse sur l'axe longitudinal x et où Vy représente la projection du vecteur vitesse sur un axe transversal y du véhicule 10, l'axe y étant perpendiculaire à l'axe x. L'intersection des axes x et y se situe au centre de gravité G du véhicule 10. Sur la figure 1 on a également représenté l'accélération γ du véhicule 10 sous forme d'un vecteur.

Dans la suite de la description on note la dérivée d'un paramètre par rapport au temps en ajoutant un point au-dessus de la notation du paramètre. De façon connue, on mesure la vitesse de lacet, notée $\dot{\Psi}$ et l'accélération transversale $\gamma_t$ du centre de gravité du véhicule 10. L'accélération transversale $\gamma_t$ est la projection de l'accélération γ sur l'axe transversal y du véhicule 10.

A partir de la vitesse longitudinale Vx, de la vitesse de lacet $\dot{\Psi}$ et de l'accélération transversale $\gamma_t$ on déduit la vitesse de dérive β :

$$\dot{\beta} = \dot{\Psi} - \gamma_t / Vx \qquad (2)$$

La vitesse longitudinale Vx est mesurée de façon classique sur le véhicule et on utilise un capteur particulier mesurant la vitesse de lacet $\dot{\Psi}$, l'accélération transversale $\gamma_t$ et l'accélération longitudinale du véhicule 10. Ce capteur peut appartenir à un calculateur de l'ESP ou encore former un composant autonome relié au calculateur de l'ESP. Ce capteur comporte par exemple plusieurs éléments tels que des gyromètres ou des accéléromètres réalisés dans un technologie de micro-usinage d'un substrat de silicium.

Cette solution présente plusieurs inconvénients. Tout d'abord son coût élevé dû à la présence d'un capteur complexe réservé à l'ESP. De plus, le capteur n'est pas redondant. En cas de défaut sur la mesure de l'un des paramètres, l'ensemble de l'ESP est hors service.

L'invention vise à pallier les problèmes cités plus haut en proposant l'utilisation de capteurs non uniquement dédié au programme électronique de stabilité.

A cet effet, l'invention a pour objet un dispositif de stabilisation de véhicule comportant un programme électronique de stabilité destiné à détecter des situations de sur ou sous virage du véhicule et à corriger ces situations en appliquant un couple correcteur sur au moins une roue du véhicule, caractérisé en ce qu'il comporte des capteurs de mesure de vitesse angulaire instantanée d'une roue droite et d'une roue gauche du véhicule et en ce que le programme comporte des moyens pour déterminer le couple correcteur en fonction d'informations reçues des capteurs de mesure de vitesse angulaire.

Avantageusement, les capteurs de mesure de vitesse angulaire appartiennent à un système anti-blocage des roues du véhicule.

Avantageusement, les moyens pour déterminer le couple correcteur déterminent une vitesse de lacet du véhicule et une accélération transversale du véhicule à partir d'informations reçues des capteurs de mesure de vitesse angulaire et à partir de dimensions du véhicule.

Avantageusement, les moyens pour déterminer le couple correcteur déterminent une vitesse de lacet du véhicule et une accélération transversale du véhicule en fonction d'un rayon de courbure de la trajectoire du véhicule au niveau des roues où la vitesse angulaire ($\omega_i$) est mesurée et d'un coefficient pondérateur permettant de compenser un écart entre le rayon de courbure au niveau des roues et un rayon de courbure au niveau du centre de gravité du véhicule. L'emploi de ce coefficient pondérateur permet d'améliorer la précision dans la détermination de la vitesse de lacet et de l'accélération transversale du véhicule.

Les capteurs peuvent mesurer soit la vitesse angulaire des roues avant, soit la vitesse angulaire des roues arrière du véhicule. Dans le cas des roues avant, le dispositif comporte également des moyens de mesure d'un angle de braquage d'un volant du véhicule afin de ramener l'information de vitesse angulaire des roues dans l'axe du véhicule. Il est possible d'utiliser les capteurs à la fois des roues avant et des roues arrières afin d'obtenir une redondance dans les informations traitées.

Il est possible de compléter le dispositif en y adjoignant un capteur de mesure de l'accélération longitudinale du véhicule. Les moyens pour déterminer le couple correcteur peuvent alors déterminer une vitesse de lacet du véhicule en situation de dérive à l'aide d'une information reçue du capteur de mesure de l'accélération longitudinale du véhicule.

Le dispositif peut également comporter un capteur de mesure de l'accélération transversale du véhicule. Les moyens pour déterminer le couple correcteur peuvent alors déterminer une accélération de dérive du véhicule à l'aide d'une information reçue du capteur de mesure de l'accélération latérale du véhicule.

L'invention sera mieux comprise et d'autres avantages apparaîtront à la lecture de la description détaillée d'un mode de réalisation donné à titre d'exemple, description illustrée par le dessin joint dans lequel :

- la figure 1 représente en vue de dessus un véhicule ;
- la figure 2 représente un véhicule 1 soumis à un lacet $\Psi$ et
- la figure 3 représente un exemple de dispositif de stabilisation de véhicule.

Par souci de clarté, les mêmes éléments porteront les mêmes repères dans les différentes figures.

La figure 1 a déjà été décrite plus haut dans l'introduction.

La figure 2 représente un véhicule 1 soumis à un lacet $\Psi$. Le véhicule 10 comprend une caisse 11 portée par quatre roues 1, 2, 3 et 4. Les roues 1 et 2 forment les roues avant et sont solidaires d'un essieu avant 12. Les roues 3 et 4 forment les roues arrières du véhicule 10 et sont solidaires d'un essieu arrière 13.

Un premier paramètre nécessaire à la détermination du couple correcteur est la vitesse de lacet notée $\dot{\Psi}$. Ce paramètre est déterminé à l'aide de mesures réalisées par des capteurs de mesure de vitesse angulaire instantanée de deux roues du véhicule comme par exemple les deux roues arrières. Lorsque la vitesse de dérive $\beta$ est nulle, on a :

$$\dot{\Psi} = \gamma_t / Vx \quad (3)$$

Par ailleurs, on a par définition : $\tan\Psi = x/Rg$ où x représente une distance parcourue selon la direction x et Rg représente le rayon de courbure de la trajectoire du véhicule au niveau du centre de gravité du véhicule. Lorsque le lacet est faible on peut assimiler le lacet à sa tangente :

$$\Psi = x / Rg \quad (4)$$

En dérivant l'équation (4) on obtient :

$$\dot{\Psi} = Vx / Rg \quad (5)$$

En combinant les équations (3) et (5), on obtient :

$$\gamma_t = Vx^2 / Rg \quad (6)$$

Pour chaque roue i, il est possible d'écrire que :

$$\Delta xi = Ri.\Delta\Psi \quad (7)$$

où $\Delta xi$ représente un petit déplacement de la roue i, Ri représente le rayon de courbure du véhicule au niveau de la roue i et $\Delta\Psi$ représente la variation de lacet $\Psi$ lors d'un petit déplacement $\Delta xi$. Par exemple pour les deux roues arrières 3 et 4, on en déduit que :

$$\frac{\Delta x3}{\Delta x4} \;\hat{=}\; \frac{Vxp_3}{Vxp_4} = \frac{R_3}{R_4} = \frac{R-v}{R+v} \quad (8)$$

où $Vxp_i$ représente la vitesse longitudinale de la roue i, R représente le rayon de courbure du véhicule au niveau du centre de l'essieu 13 portant les roues 3 et 4 et où v représente le demi voie du véhicule 10. On en déduit que :

$$R = v.\frac{Vxp_4 + Vxp_3}{Vxp_4 - Vxp_3} \quad (9)$$

L'équation 9 permet de déterminer le rayon de courbure au centre de gravité du véhicule en faisant l'approximation que :

$$Rg^2 = R^2 + L^2 \quad (10)$$

où L représente le demi empattement arrière, entre le centre de gravité G du véhicule 10 et l'essieu arrière 13. Les équations (5) et (6) deviennent alors :

$$\dot{\Psi} = Vx / Rg = \delta_R.\frac{Vx}{R} \quad (11) \quad \text{avec } \delta_R = \frac{1}{\sqrt{1 + (L/R)^2}} \quad (12)$$

$$\gamma_t = Vx^2 / Rg = \delta_R.\frac{Vx^2}{R} \quad (13)$$

$\delta_R$ représente un coefficient pondérateur permettant de déduire le rayon de courbure Rg au centre de gravité G à partir du rayon de courbure R déterminé au niveau de l'essieu arrière 13.

La mesure de vitesse angulaire réalisée sur les deux roues arrières 3 et 4 suffit pour déterminer la vitesse de lacet $\dot{\Psi}$ et l'accélération transversale $\gamma_t$ du véhicule 10. Il est également possible d'utiliser les roues avant 1 et 2 du véhicule 10 pour déterminer la vitesse de lacet $\dot{\Psi}$ et l'accélération transversale $\gamma_t$. En utilisant à la fois les roues avant 1 et 2 ainsi que les roues arrières 3 et 4, on obtient une détermination redondante de la vitesse de lacet $\dot{\Psi}$ et de l'accélération transversale $\gamma_t$. Ceci permet une vérification des déterminations. En cas de différence notable, entre les valeurs des paramètres issus des différentes roues , on pourra déclarer la détermination invalide et on pourra ne plus en tenir compte pour le calcul du couple correcteur à appliquer au roues du véhicule 10.

Pour la détermination de la vitesse de lacet $\dot{\Psi}$ et de l'accélération transversale $\gamma_t$ à partir des roues avant 1 et 2, on tient compte d'un angle de braquage B entre un plan de la roue et le repère x y lié au véhicule 10. L'angle de braquage B est proportionnel à un angle de rotation d'un volant du véhicule 10 dont la mesure est aisée au moyen d'un capteur d'angle mesurant la rotation de l'axe du volant. Un repère lié à la roue est noté x' y' dans lequel l'angle de braquage B est l'angle que font entre eux les axes x et x'. La mesure de vitesse angulaire instantanée d'une roue avant i permet de déterminer la vitesse longitudinale de la roue $Vxp_i'$. Un changement de repère entre le repère lié à la roue et le repère lié au véhicule 10 permet de déterminer la vitesse longitudinale $Vxp_i$ du véhicule 10 au niveau de la roue i considérée. On utilise par exemple la formule de changement de repère suivante :

$$\begin{bmatrix} Vxp_i \\ Vyp_i \end{bmatrix} = \begin{bmatrix} \cos(B) & -\sin(B) \\ \sin(B) & \cos(B) \end{bmatrix} * \begin{bmatrix} Vxp_i' \\ Vyp_i' \end{bmatrix} \quad (14)$$

en première approximation en supposant nulle la vitesse transversale $Vyp_i'$ d'une roue i on obtient :

$$Vxp_i = Vxp_i'.\cos(B) \quad (15)$$

Pour obtenir la vitesse longitudinale $Vxp_i$ d'une roue i à l'aide de l'équation (15), on suppose qu'il n'y a pas de glissement au niveau de la roue i, la vitesse transversale $Vyp_i'$ de la roue i est nulle. On suppose également qu'il n'y a pas de variation de rayon de la roue lorsque le véhicule est en charge. On a alors par exemple pour les roues arrières 3 et 4 :

$$Vxp3 = rl.\omega_3 \quad (16)$$

$$Vxp4 = rl.\omega_4 \quad (17)$$

où rl représente le rayon d'une roue, $\omega_i$ représente la vitesse angulaire de rotation de la roue i. De l'équation (9) on déduit que :

$$R = v.\frac{\omega_4 + \omega_3}{\omega_4 - \omega_3} \quad (18)$$

En prenant la vitesse longitudinale Vx au centre de gravité G égale à la moyenne des vitesses longitudinales des deux roues arrières :

$$Vx = \frac{1}{2}\left(Vxp_3 + Vxp_4\right) \qquad (19)$$

on obtient à partir des équations (11) et (13) :

$$\dot{\Psi}_2 = \frac{rl.\delta r}{2v}.(\omega_4 - \omega_3) \qquad (20)$$

$$\gamma_{t2} = \frac{rl^2.\delta r}{4v}.(\omega_4^2 - \omega_3^2) \qquad (21)$$

Pour les roues avant 1 et 2, la vitesse longitudinale Vx au centre de gravité G égale à :

$$Vx = \frac{1}{2}\left(Vxp1 + Vxp2\right).\cos(B) \qquad (22)$$

On obtient de la même façon à partir des équations (11) et (13) :

$$\dot{\Psi}_1 = \frac{rl.\delta r.\cos(B)}{2v}.(\omega_2 - \omega_1) \qquad (23)$$

$$\gamma_{t1} = \frac{rl^2.\delta r.\cos^2(B)}{4v}.(\omega_2^2 - \omega_1^2) \qquad (24)$$

Dans les équations (20), (21), (23) et (24), on a différencié les
notations de vitesse de lacet et d'accélération transversale : $\dot{\Psi}_1$ et $\gamma_{t1}$ pour
les roues avants 1 et 2 et $\dot{\Psi}_2$ et $\gamma_{t2}$ pour les roues arrières 3 et 4.
L'approche précédemment décrite permet de déterminer la vitesse de lacet $\dot{\Psi}$ et l'accélération transversale $\gamma_t$ en l'absence de dérive $\beta$ ou à dérive constante du véhicule. En présence de dérive $\beta$, l'accélération longitudinale du centre de gravité G du véhicule 10 est notée $Al_m$ et l'accélération transversale du centre de gravité G du véhicule 10 est notée $At_m$. Ces accélérations répondent aux équations suivantes :

$$Al_m = Ax_G - Vy\,\dot{\Psi} \qquad (25)$$

$$At_m = Ay_G - Vx\,\dot{\Psi} \qquad (26)$$

$Ax_G$ et $Ay_G$ sont les accélérations du centre de gravité G dues à la dérive β du véhicule. En première approximation on considère que $Ax_G$ est nulle. A partir d'une mesure de l'accélération transversale $At_m$ du centre de gravité du véhicule G au moyen d'un capteur d'accélération situé au centre de gravité du véhicule, on peut déterminer accélération de la dérive notée $\ddot{\beta}$. Plus précisément :

$$\ddot{\beta} = At_m - Vx\,\dot{\Psi} \qquad (27)$$

Autrement dit, l'accélération de la dérive $\ddot{\beta}$ est la différence entre la mesure $At_m$ faite par le capteur d'accélération transversale du centre de gravité G du véhicule 10 et la détermination de l'accélération transversale $\gamma_t$ faite au moyen des capteurs de mesure de vitesse angulaire instantanée des roues du véhicule. L'angle de lacet peut être obtenu en intégrant l'équation (26) :

$$\Psi = \frac{\int At_m}{Vx} + \Psi_{abs} \qquad (28)$$

où $\Psi_{abs}$ représente un écart angulaire entre le repère x, y lié au véhicule 10 et le repère fixe xo, yo.

On peut affiner la détermination de la vitesse de lacet $\dot{\Psi}$ en prenant en compte un possible glissement au niveau des roues. Autrement dit la vitesse transversale $Vyp_i$ au niveau de la roue i n'est pas nulle. On exprime l'accélération longitudinale $Axp_i$ de la roue i en adaptant l'équation (25) au niveau de la roue i :

$$Axp_i = Ax_G - Vyp_i.\dot{\Psi} = Al_m - (Vyp_i - Vy).\dot{\Psi} = Al_m \pm L_i.\dot{\Psi}^2 \qquad (29)$$

où $L_i$ représente le demi empattement du véhicule, c'est à dire la distance mesurée suivant l'axe x entre le centre de gravité G et l'essieu 12 ou 13 de la roue i considérée.

De plus, on définit pour chaque roue i un taux de glissement $\tau_i$ tel que :

$$Vxp_i.(1 + \tau_i) \approx rl.\omega_i \qquad (30)$$

Dans l'équation (30) la vitesse $Vxp_i$ peut être définie en intégrant l'accélération longitudinale $Axp_i$ de la roue i définie à l'aide de l'équation (29) :

$$Vxp_i. = \int Axp_i \qquad (31)$$

Autrement dit l'équation (30) devient :

$$\int (Al_m \pm L_i.\dot{\Psi}^2)*(1 + \tau_i) \approx rl.\omega_i \qquad (32)$$

$$(Vx \pm L_i . \frac{\overset{\bullet}{\Psi}^3}{3}) * (1 + \tau_i) \approx rl.\omega_i \qquad (33)$$

L'équation (33) permet d'estimer un taux de glissement pour chaque roue i à partir de la vitesse de lacet définie au moyen d'un capteur d'accélération transversale $At_m$ du centre de gravité G du véhicule 10 et de la vitesse de rotation $\omega_i$ de la roue considérée.

On affine ensuite la détermination de la vitesse de lacet $\overset{\bullet}{\Psi}$ en modifiant l'équation (20) de la façon suivante :

$$\overset{\bullet}{\Psi} = \frac{\delta r}{2v} . (Vxp_4 - Vxp_3) \approx \frac{rl.\delta r}{2v} . \left[ \frac{\omega_4}{1 + \tau_4} - \frac{\omega_3}{1 + \tau_3} \right] \qquad (34)$$

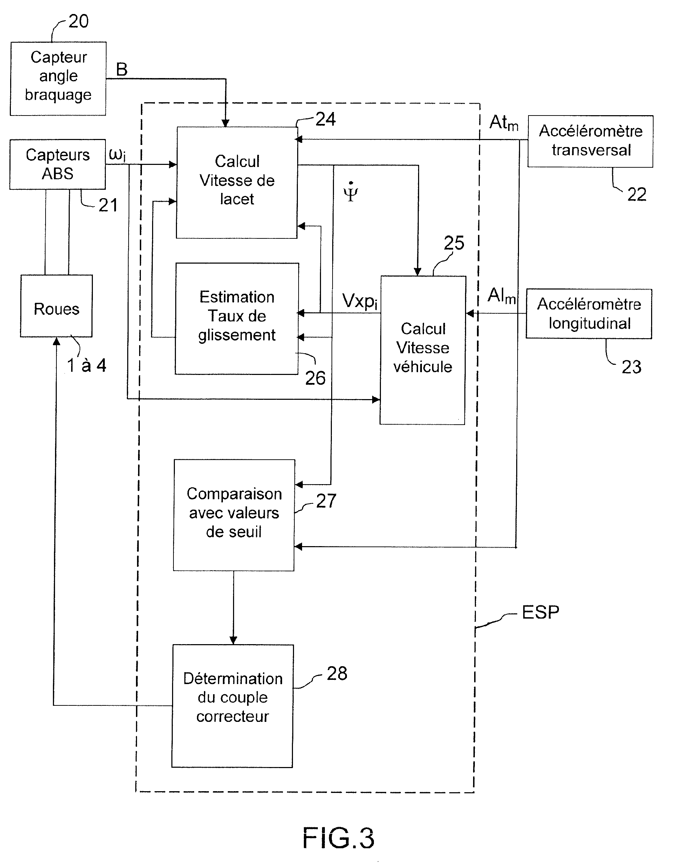

La figure 3 représente un exemple de dispositif de stabilisation de véhicule. Le dispositif comporte un ESP recevant les données provenant du capteur 20 d'angle de braquage B, des capteurs 21 de vitesse angulaire $\omega_i$ instantanée des roues, d'un accéléromètre 22 mesurant l'accélération transversale $At_m$ du centre de gravité G du véhicule 10 et d'un accéléromètre mesurant l'accélération longitudinale $Al_m$ du centre de gravité G du véhicule 10. Les capteurs 21 appartiennent au système anti-blocage des roues du véhicule 10. Les accéléromètres 22 et 23 peuvent être intégrés à l'ESP. L'ESP comprend plusieurs unités de calcul 24 à 28. L'unité 24 permet de mettre en oeuvre l'équation (34) et ainsi de déterminer la vitesse de lacet $\overset{\bullet}{\Psi}$ du véhicule 10. L'unité 25 permet de mettre en oeuvre les équations (29) et (31) et ainsi de déterminer les vitesses longitudinales $Vxp_i$ du véhicule 10 au niveau de chaque roue i. L'unité 26 permet de mettre en oeuvre les équations (19), (22) et (33) et ainsi de déterminer le taux de glissement de chaque roue i du véhicule 10. Le calcul du taux de glissement permet d'affiner la détermination de la vitesse de lacet en mettant en oeuvre l'équation (34) dans l'unité de calcul (24). L'unité 27 établit une comparaison de la vitesse de lacet $\overset{\bullet}{\Psi}$ et de l'accélération transversale $At_m$ par rapport à des valeurs de seuils prédéfinies. Lorsque la vitesse de lacet $\overset{\bullet}{\Psi}$ et de l'accélération transversale $At_m$ déterminées dépassent les valeurs de seuil, l'unité 28 applique un couple correcteur sur au moins une roue 1 à 4 du véhicule 10 pour que les valeurs déterminées restent en dessous des valeurs de seuil.

## Revendications

1. Dispositif de stabilisation de véhicule (10) comportant un programme électronique de stabilité (ESP) destiné à détecter des situations de sur ou sous virage du véhicule (10) et à corriger ces situations en appliquant un couple correcteur sur au moins une roue (1, 2, 3, 4) du véhicule (10), **caractérisé en ce qu'**il comporte des capteurs (21) de mesure de vitesse angulaire ($\omega_i$) instantanée d'une roue droite (2, 4) et d'une roue gauche (1,3) du véhicule (10) et **en ce que** le programme comporte des moyens (24 à 28) qui pour déterminer le couple correcteur, déterminent une vitesse de lacet ($\overset{\bullet}{\Psi}$) du véhicule (10) et une accélération transversale ($\gamma_t$) du véhicule (10) à partir d'informations reçues des capteurs (21) de mesure de vitesse angulaire ($\omega_i$) et à partir de dimensions (v, L, rl) du véhicule (10).

2. Dispositif selon la revendication 1, **caractérisé en ce que** les capteurs (21) de mesure de vitesse angulaire appartiennent à un système anti-blocage des roues du véhicule (10).

3. Dispositif selon l'une quelconque des revendications 1 ou 2, **caractérisé en ce que** les moyens pour déterminer le couple correcteur déterminent une vitesse de lacet ($\overset{\bullet}{\Psi}$) du véhicule (10) et une accélération transversale ($\gamma_t$) du véhicule (10) en fonction d'un rayon de courbure (R) de la trajectoire du véhicule (10) au niveau des roues où la vitesse angulaire ($\omega_i$) est mesurée et d'un coefficient pondérateur ($\delta_R$) permettant de compenser un écart entre le rayon de courbure (R) au niveau des roues et un rayon de courbure (Rg) au niveau du centre de gravité (G) du véhicule (10).

4. Dispositif selon l'une des revendications précédentes, **caractérisé en ce que** les capteurs (21) mesurent la vitesse angulaire de roues arrière (3, 4) du véhicule (10).

5. Dispositif selon l'une des revendications précédentes, **caractérisé en ce que** les capteurs (21) mesurent la vitesse angulaire de roues avant (1, 2) du véhicule (10) et **en ce que** le dispositif comporte des moyens de mesure (20) d'un angle de braquage (B) d'un volant du véhicule (10).

6. Dispositif selon l'une des revendications précédentes, **caractérisé en ce qu'**il comporte un capteur (23) de mesure de l'accélération longitudinale ($Al_m$) du véhicule (10).

7. Dispositif selon la revendication 6, **caractérisé en ce que** les moyens pour déterminer le couple correcteur déterminent une vitesse de lacet ($\dot{\Psi}$) du véhicule (10) en situation de dérive à l'aide d'une information reçue du capteur de mesure de l'accélération longitudinale ($Al_m$) du véhicule (10).

8. **Dispositif selon l'une des revendications précédentes,**
   **caractérisé en ce qu'**il comporte un capteur (22) de mesure de l'accélération transversale ($At_m$) du véhicule (10).

9. Dispositif selon la revendication 8, **caractérisé en ce que** les moyens pour déterminer le couple correcteur déterminent une accélération de dérive ($\ddot{\beta}$) du véhicule (10) à l'aide d'une information reçue du capteur (22) de mesure de l'accélération transversale ($At_m$) du véhicule (10).

FIG.1

FIG.2

FIG.3

**Office européen des brevets**

**RAPPORT DE RECHERCHE EUROPEENNE**

Numéro de la demande

EP 07 30 1394

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 6 161 905 A (HAC ALEKSANDER BOGUSLAW [US] ET AL) 19 décembre 2000 (2000-12-19) * le document en entier * ----- | 1-9 | INV. B60W30/02 B60W40/10 |
| Y | JP 2007 090770 A (KANEGAFUCHI CHEMICAL IND) 12 avril 2007 (2007-04-12) * abrégé * ----- | 1,2,4,5, 8 | |
| Y | EP 1 743 819 A (FORD GLOBAL TECHNOLOGIES LLC A [US]) 17 janvier 2007 (2007-01-17) * le document en entier * ----- | 1-9 | |
| Y | JP 2001 182096 A (SAEKI KENSETSU KOGYO CO LTD) 3 juillet 2001 (2001-07-03) * abrégé * ----- | 1,2,4,5, 8 | |
| Y | EP 1 109 025 A (RENAULT [FR]; PEUGEOT CITROEN AUTOMOBILES SA [FR] RENAULT SA [FR]; PEU) 20 juin 2001 (2001-06-20) * le document en entier * ----- | 1,2 | |
| Y | JP 2003 182555 A (TOYOTA MOTOR CORP) 3 juillet 2003 (2003-07-03) * abrégé * ----- | 1-3 | DOMAINES TECHNIQUES RECHERCHES (IPC) B60W B60T |
| Y | DE 42 26 749 A1 (DAIMLER BENZ AG [DE]) 17 février 1994 (1994-02-17) * le document en entier * ----- | 1,2,6-8 | |
| E | FR 2 899 189 A (PEUGEOT CITROEN AUTOMOBILES SA [FR]) 5 octobre 2007 (2007-10-05) * le document en entier * ----- | 1-9 | |

Le présent rapport a été établi pour toutes les revendications

| Lieu de la recherche | Date d'achèvement de la recherche | Examinateur |
|---|---|---|
| Munich | 20 février 2008 | Granier, Frédéric |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 07 30 1394

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-02-2008

| Document brevet cité au rapport de recherche | | Date de publication | Membre(s) de la famille de brevet(s) | | Date de publication |
|---|---|---|---|---|---|
| US 6161905 | A | 19-12-2000 | AUCUN | | |
| JP 2007090770 | A | 12-04-2007 | AUCUN | | |
| EP 1743819 | A | 17-01-2007 | AUCUN | | |
| JP 2001182096 | A | 03-07-2001 | AUCUN | | |
| EP 1109025 | A | 20-06-2001 | FR | 2802646 A1 | 22-06-2001 |
| JP 2003182555 | A | 03-07-2003 | JP | 4006573 B2 | 14-11-2007 |
| DE 4226749 | A1 | 17-02-1994 | FR | 2694808 A1 | 18-02-1994 |
| | | | GB | 2269571 A | 16-02-1994 |
| | | | IT | 1261511 B | 23-05-1996 |
| | | | SE | 513553 C2 | 02-10-2000 |
| | | | SE | 9302610 A | 14-02-1994 |
| FR 2899189 | A | 05-10-2007 | AUCUN | | |

Pour tout renseignement concernant cette annexe : voir Journal Officiel de l'Office européen des brevets, No.12/82